# EUROPÄISCHE PATENTSCHRIFT

(11) **EP 3 181 391 B1**
(45) Veröffentlichungstag und Bekanntmachung des Hinweises auf die Patenterteilung: **06.11.2019**
(21) Anmeldenummer: 17155518.8
(22) Anmeldetag: 11.07.2013
(51) Int. Cl.: B60K 15/03, B60K 15/077, B65D 6/34, B29C 65/48, B29C 65/00, B29L 31/00, B29C 65/02

(54) **FLÜSSIGKEITSTANK MIT EINEM VERBINDUNGSELEMENT**
LIQUID TANK WITH A CONNECTION ELEMENT
RÉSERVOIR DE LIQUIDE DOTÉ D'UN ÉLÉMENT DE LIAISON

(30) Priorität: 20.09.2012 DE 102012108858
(43) Veröffentlichungstag der Anmeldung: 21.06.2017
(62) Teilanmeldung aus: 13176162.9
(73) Patentinhaber: VERITAS AG, 63571 Gelnhausen (DE)
(72) Erfinder: RÖSCH, Thomas, 63589 Linsengericht (DE); MAIBERGER, Simon, 63599 Biebergemünd (DE)
(74) Vertreter: Patentship Patentanwaltsgesellschaft mbH

(56) Entgegenhaltungen:
- DE-A1- 19 627 742
- GB-A- 2 176 448
- US-A- 4 453 564
- US-A- 4 872 557
- US-A1- 2007 228 050

## Beschreibung

Die vorliegende Erfindung betrifft einen Flüssigkeitstank mit einem Verbindungselement, insbesondere für ein Kraftfahrzeug.

Tanks für Kraftfahrzeuge werden oftmals mittels einer Blasformtechnik hergestellt. Eine gezielte Beeinflussung der Festigkeitseigenschaften ist bei dieser Technik nur durch eine allgemeine Änderung der Wandstärke möglich. Diese Vorgehensweise ist jedoch unflexibel und es entsteht ein hoher ungenutzter Materialaufwand. Eine gezielte Verstärkung einzelner Tankbereiche ist nur bedingt möglich. Geometriesprünge können bei den Umformprozessen nicht realisiert werden. Zusätzliche konstruktive Elemente müssen einzeln durch zusätzliche Schweißungen angebracht werden. Die Zugänglichkeit bei einer Montage dieser Elemente ist im Inneren des Tanks sehr stark eingeschränkt. Dies führt zu einer Blindmontage oder dazu, dass zusätzliche Montage-Löcher geschaffen werden müssen, die wieder mit Deckeln verschlossen oder verschweißt werden. Das Einbringen der Elemente in das Tankinnere und anschließendes Umblasen schränkt die konstruktiven Möglichkeiten stark ein.

Die Druckschrift DE 8 615 526 U1 beschreibt einen Brennstofftank aus Kunststoff für Fahrzeuge. Der Brennstofftank umfasst zwei Halbschalen, die entsprechend eine obere Halbschale und eine untere Bodenhalbschale des Brennstofftanks bilden. Die Halbschalen sind in den Randbereichen aneinander befestigt, so dass diese einen Hohlraum bilden. Allerdings weist diese Konstruktion lediglich eine geringe Stabilität auf. Wird ein derartiger Tank mit Wasser statt mit Brennstoff befüllt, steigen durch die höhere Dichte des Wassers und das daraus resultierende höhere Gewicht die Anforderungen an die Stabilität.

Die Druckschrift US 2007/228050 A1 betrifft einen Kraftstofftank mit einem Tankkörper, der aus einer oberen Wand und einer unteren Wand gebildet ist.

Die Druckschrift DE 196 27742 A1 betrifft einen Kraftstoffbehälter aus Kunststoff mit einem Boden und einer oberen Abschlusswand.

Die Druckschrift US 4,872,557 A betrifft stapelbare Behälter für viskose Materialien, insbesondere für eutektische Salzmischungen.

Die Druckschrift US 4,453,564 A beschreibt einen Kraftstofftank für Fahrzeuge.

Die Druckschrift GB 2 176448 A beschreibt einen Kraftstofftank für ein Fahrzeug, der aus zwei Spritzgussteilen zusammengesetzt ist, die dichtend entlang eines Verbindungsabschnittes gesichert sind.

Es ist die der Erfindung zugrundeliegende Aufgabe, einen Flüssigkeitstank mit verbesserter Stabilität anzugeben.

Diese Aufgabe wird durch den Gegenstand mit den Merkmalen nach dem unabhängigen Anspruch gelöst. Vorteilhafte Ausführungsformen der Erfindung sind Gegenstand der Figuren, der Beschreibung und der abhängigen Ansprüche.

Gemäß der Erfindung wird die Aufgabe durch einen Flüssigkeitstank gelöst, mit unter anderem einer ersten Flüssigkeitstankschale mit einem ersten Verbindungselement, das sich von einer Innenwandung der ersten Flüssigkeitstankschale in das Innere des Flüssigkeitstanks erstreckt und einer zweiten Flüssigkeitstankschale mit einem zweiten Verbindungselement, das sich von einer Innenwandung der zweiten Flüssigkeitstankschale in das Innere des Flüssigkeitstanks erstreckt, bei dem das erste Verbindungselement und das zweite Verbindungselement im Inneren des Flüssigkeitstanks miteinander verbunden sind. Der Flüssigkeitstank ist beispielsweise ein Flüssigkeitstank für ein Kraftfahrzeug, beispielsweise ein Kraftstofftank oder ein Tank für eine wässrige Harnstofflösung (Additiv-Tank bzw. SCR-Tank). Durch die Verbindung der beiden Flüssigkeitstankschalen wird der technische Vorteil erreicht, dass sich die Stabilität des Flüssigkeitstanks verbessert.

In einer vorteilhaften Ausführungsform ist die erste Flüssigkeitstankschale und/oder die zweite Flüssigkeitstankschale ein Kunststoffformteil. Dadurch wird beispielsweise der technische Vorteil erreicht, dass sich der Flüssigkeitstank auf einfache Weise herstellen lässt.

In einer weiteren vorteilhaften Ausführungsform sind die erste Flüssigkeitstankschale und das erste Verbindungselement einstückig durch ein Spritzgussteil gebildet und/oder die zweite Flüssigkeitstankschale und das zweite Verbindungselement sind einstückig durch ein Spritzgussteil gebildet. Dadurch wird beispielsweise der technische Vorteil erreicht, dass sich die Verbindungselemente mit einem geringen Volumen herstellen lassen und sich das Volumen des Flüssigkeitstanks erhöht und die Flüssigkeitstankschale zusammen mit dem Verbindungselement in einem Arbeitsgang hergestellt werden kann.

In einer weiteren vorteilhaften Ausführungsform ist das erste Verbindungselement der ersten Flüssigkeitstankschale ein säulenförmiger Abschnitt der ersten Flüssigkeitstankschale und/oder das zweite Verbindungselement der zweiten Flüssigkeitstankschale ist ein säulenförmiger Abschnitt der zweiten Flüssigkeitstankschale. Dadurch wird beispielsweise der technische Vorteil erreicht, dass eine hohe Stabilität des Flüssigkeitstanks erzielt wird.

In einer weiteren vorteilhaften Ausführungsform wird das Verbindungselement durch eine Schwallwand zum Hemmen einer Flüssigkeitsbewegung gebildet. Dadurch wird beispielsweise der technische Vorteil erreicht, dass eine Schwallwand zum Verbinden der Flüssigkeitstankschalen verwendet werden kann.

Gemäß der Erfindung umfasst das erste Verbindungselement und/oder das zweite Verbindungselement eine Kontaktfläche zum Befestigen des Verbindungselementes. Dadurch wird beispielsweise der technische Vorteil erreicht, dass eine großflächige und stabile Verbindung zwischen den Verbindungselementen erzielt wird.

Gemäß der Erfindung umfasst die Kontaktfläche eine Vertiefung zum Aufnehmen eines Schweißaustriebs. Dadurch wird beispielsweise ebenfalls der technische Vorteil erreicht, dass eine großflächige und stabile Verbindung zwischen den Verbindungselementen erzielt wird.

In einer weiteren vorteilhaften Ausführungsform umfasst die Kontaktfläche des ersten Verbindungselementes einen Vorsprung zum Einsetzen in eine in eine Aussparung in der Kontaktfläche des zweiten Verbindungselementes. Dadurch wird beispielsweise der technische Vorteil erreicht, dass eine gegenseitige Positionierung der Verbindungselemente verbessert wird.

In einer weiteren vorteilhaften Ausführungsform ist die Vertiefung kreisförmig auf der Kontaktfläche angeordnet ist. Dadurch wird beispielsweise der technische Vorteil erreicht, dass ein Schweißaustrieb von allen Seiten her aufgenommen werden kann.

In einer weiteren vorteilhaften Ausführungsform umfasst die Kontaktfläche mehrere konzentrische kreisförmige und/oder gekreuzte Vertiefungen. Dadurch wird beispielsweise der technische Vorteil erreicht, dass ein großflächiges Verschmelzen der beiden Verbindungselemente gewährleistet werden kann.

In einer weiteren vorteilhaften Ausführungsform weist das erste Verbindungselement und/oder das zweite Verbindungselement eine zylindrische Form auf. Dadurch wird beispielsweise der technische Vorteil erreicht, dass eine hohe Stabilität und eine geringe Oberfläche der Verbindungselemente erzielt werden kann.

In einer weiteren vorteilhaften Ausführungsform umfasst die erste Flüssigkeitstankschale Stabilisierungsrippen zum Stabilisieren des ersten Verbindungselements an der Innenwandung und/oder die zweite Flüssigkeitstankschale umfasst Stabilisierungsrippen zum Stabilisieren des zweiten Verbindungselements an der Innenwandung. Dadurch wird beispielsweise der technische Vorteil erreicht, dass sich die Festigkeit des Flüssigkeitstanks noch weiter verbessert.

In einer weiteren vorteilhaften Ausführungsform sind das erste Verbindungelement oder das zweite Verbindungselement durch einen Hohlkörper mit einem Hohlraum gebildet. Dadurch wird beispielsweise der technische Vorteil erreicht, dass sich der Materialbedarf zum Herstellen des Flüssigkeitstanks vermindert.

In einer weiteren vorteilhaften Ausführungsform ist der Hohlraum von einer Außenwandung her zugänglich, um das erste Verbindungselement und das zweite Verbindungselement zu verbinden. Dadurch wird beispielsweise der technische Vorteil erreicht, dass die beiden Flüssigkeitstankschalen von außen verschweißt werden können.

In einer weiteren vorteilhaften Ausführungsform sind das erste Verbindungselement im Zentrum der ersten Flüssigkeitstankschale und/oder das zweite Verbindungselement im Zentrum der zweiten Flüssigkeitstankschale angeordnet. Dadurch wird beispielsweise der technische Vorteil erreicht, dass auftretende Kräfte von dem zentralen Verbindungselement effizient aufgenommen werden können.

In einer weiteren vorteilhaften Ausführungsform umfasst die erste Flüssigkeitstankschale eine Schwallwand, die an dem ersten Verbindungselement befestigt ist oder die zweite Flüssigkeitstankschale umfasst eine Schwallwand, die an dem zweiten Verbindungselement befestigt ist. Dadurch wird beispielsweise der technische Vorteil erreicht, dass eine ungewollte Bewegung der Flüssigkeit gehemmt wird.

In einer weiteren vorteilhaften Ausführungsform ist die Schwallwand plattenförmig. Dadurch wird beispielsweise der technische Vorteil erreicht, dass sich die Stabilität des Flüssigkeitstanks noch weiter verbessert.

In einer weiteren vorteilhaften Ausführungsform ist die Schwallwand seitlich an dem ersten Verbindungselement oder dem zweiten Verbindungselement befestigt. Dadurch wird beispielsweise der technische Vorteil erreicht, dass das Verbindungselement seitlich stabilisiert ist.

In einer weiteren vorteilhaften Ausführungsform umfasst die Flüssigkeitstankschale eine weitere Schwallwand, die an dem ersten oder zweiten Verbindungselement befestigt ist. Dadurch wird beispielsweise der technische Vorteil erreicht, dass sich die Stabilität noch weiter verbessert.

In einer weiteren vorteilhaften Ausführungsform umfasst die erste oder die zweite Flüssigkeitstankschale ein weiteres Verbindungselement und die Schwallwand ist an dem weiteren Verbindungselement befestigt. Dadurch wird beispielsweise der technische Vorteil erreicht, dass sich die Stabilität des Flüssigkeitstanks noch weiter verbessert.

Ausführungsbeispiele der Erfindung sind in den Zeichnungen dargestellt und werden im Folgenden näher beschrieben.

Es zeigen:
- Fig. 1: eine schematische Ansicht eines Flüssigkeitstanks mit zwei Flüssigkeitstankschalen;
- Fig. 2: eine Ansicht des Flüssigkeitstanks mit zwei Flüssigkeitstankschalen;
- Fig. 3: eine weitere Ansicht des Flüssigkeitstanks mit zwei Flüssigkeitstankschalen;
- Fig. 4: eine Ansicht einer Flüssigkeitstankschale;
- Fig. 5: eine weitere Ansicht der Flüssigkeitstankschale;
- Fig. 6: eine weitere Ansicht der Flüssigkeitstankschale;
- Fig. 7: eine Teilansicht der Flüssigkeitstankschale;
- Fig. 8: eine weitere Ansicht der Flüssigkeitstankschale;
- Fig. 9: eine weitere Ansicht der Flüssigkeitstankschale; und
- Fig. 10: eine Ansicht der Flüssigkeitstankschale von unten.

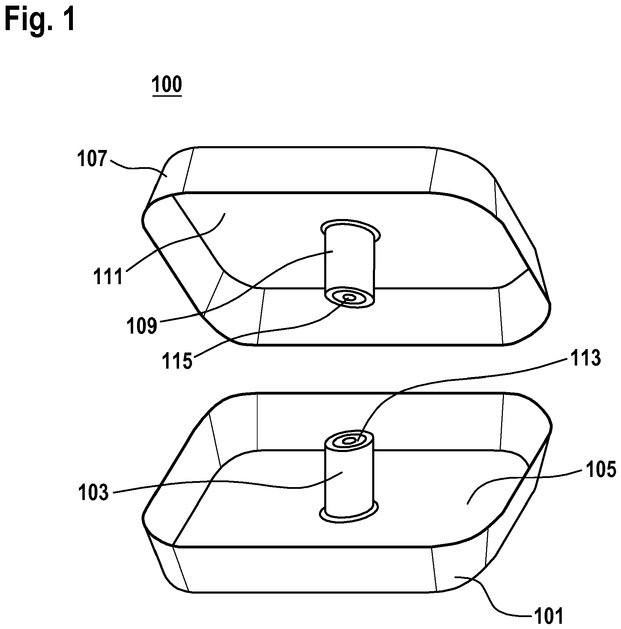

Fig. 1 zeigt eine schematische Ansicht des Flüssigkeitstanks 100 mit einer oberen Flüssigkeitstankschale 107 und einer unteren Flüssigkeitstankschale 101. Die untere Flüssigkeitstankschale 101 umfasst ein Verbindungselement 103, das sich von einer Innenwandung 105 der unteren Flüssigkeitstankschale 101 in das Innere des Flüssigkeitstanks 100 erstreckt. Die obere Flüssigkeitstankschale 107 umfasst ein weiteres Verbindungselement 109, das sich von einer Innenwandung 111 der zweiten Flüssigkeitstankschale 107 in das Innere des Flüssigkeitstanks 100 erstreckt.

Bei der Herstellung des Flüssigkeitstanks 100 werden die obere Flüssigkeitstankschale 107 und die untere Flüssigkeitstankschale 101 zusammengesetzt und an ihren Rändern miteinander verbunden. Dabei kommt eine Kontaktfläche 113 des unteren Verbindungselementes 103 mit einer Kontaktfläche 115 des oberen Verbindungselementes 109 in Berührung. Die obere und die untere Kontaktfläche 113 und 115 werden miteinander verschweißt. Dadurch wird eine mechanisch feste Verbindung zwischen dem unteren Verbindungselement 103 und dem oberen Verbindungselement 109 erreicht und die Festigkeit des Flüssigkeitstanks 100 verbessert sich.

Die Verbindung des unteren und des oberen Verbindungselementes 103 und 109 kann im Allgemeinen nicht der Erfindung entsprechend auch auf anderem Wege erfolgen. Beispielsweise können das untere oder das obere Verbindungselement 103 oder 109 auch ein Rastmittel umfassen, das beim Zusammensetzen der unteren und der oberen Flüssigkeitstankschale 101 und 107 in dem entgegengesetzten Verbindungselement einrastet. Im Allgemeinen können alle Ausgestaltungen verwendet werden, die es erlauben eine mechanisch feste Verbindung zwischen dem unteren Verbindungselement 103 und dem oberen Verbindungselement 109 herzustellen, wobei auch definierte Bewegungen bis zum Anschlag in einer Richtung zugelassen werden.

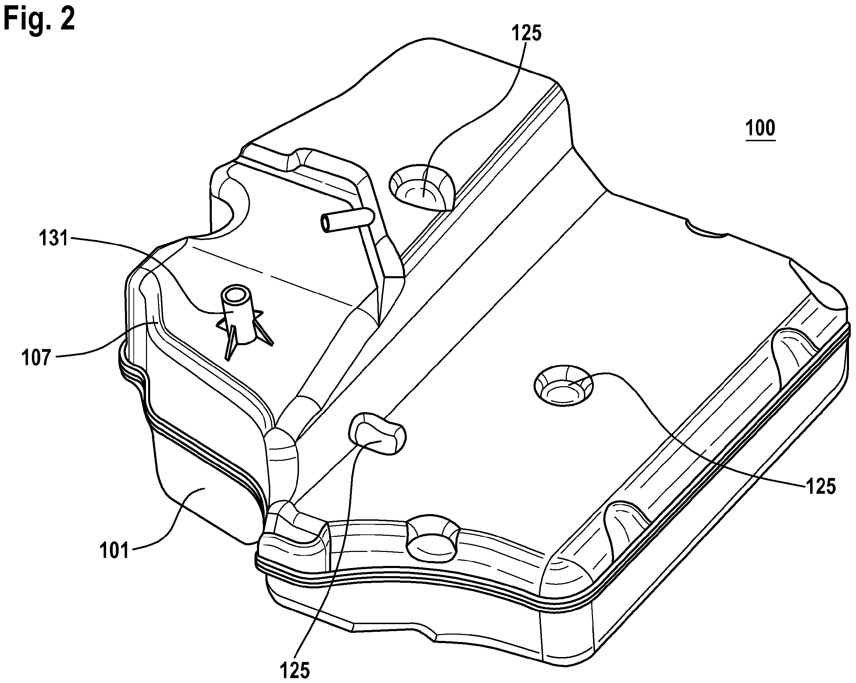

Fig. 2 zeigt eine perspektivische Ansicht des Flüssigkeitstanks 100. Der Flüssigkeitstank 100 ist beispielsweise ein Brennstofftank oder ein Tank für eine wässrige Harnstofflösung in einem Fahrzeug. Die Flüssigkeitstankschalen 101 und 107 sind beispielsweise Kunststoffformteile, die im Spritzgussverfahren hergestellt sind. Die Kunststoffe können beispielsweise Polyolefine wie Polyethylen oder Polypropylen, Polycarbonat, Polystyrol, Polyamid oder Polyoxymethylen (POM) umfassen.

Die beiden Flüssigkeitstankschalen 101 und 109 sind im Randbereich miteinander verklebt oder verschweißt und bilden im Inneren einen Hohlraum, in den die Flüssigkeit gefüllt werden kann. Der Flüssigkeitstank 100 weist einen Einfüllstutzen 131 auf, über den die Flüssigkeit in den Flüssigkeitstank 100 eingefüllt werden kann.

Durch die Verwendung einer Spritzgussformtechnik können die Flüssigkeitstankschalen 101 und 107 gewichts- und kostenoptimiert hergestellt werden, beispielsweise durch eine genaue Definition der benötigten Wandstärken. Daneben können ohne zusätzliche Fertigungsschritte Bauteile wie Pumpenflansche, Stutzen, Halterungen integriert werden. Im Tankinneren wird eine deutlich vereinfachte Montage erreicht, da durch die offenen Flüssigkeitstankschalen 101 und 107 eine gute Zugänglichkeit gewährleistet wird.

Die Festigkeit der Flüssigkeitstanks 100 lässt sich durch Anpassung einer Anordnung und Gestaltung von Verstärkungsrippen und Schwallwänden 107 gezielt lokal beeinflussen. Die Herstellung der Flüssigkeitstankschalen 101 und 107 im Spritzgussverfahren ist besonders vorteilhaft, da sich hierdurch die Verbindungselemente 103 und 109 im Gegensatz zur Herstellung im Blasformverfahren mit einem geringen Volumen herstellen lassen. Dadurch vergrößert sich das Volumen des Flüssigkeitstanks 100.

Der Flüssigkeitstank 100 umfasst drei Stellen, an denen die Verbindungselemente angeordnet sind. Die Verbindungselemente 109 sind einstückig in die obere Flüssigkeitstankschale 107 integriert und bilden einen Hohlraum 125, der von einer Außenwandung der Flüssigkeitstankschale 107 her zugänglich ist. Dadurch können das erste Verbindungselement 103 und das zweite Verbindungselement 109 nach dem Zusammensetzen der Flüssigkeitstankschalen miteinander verbunden werden.

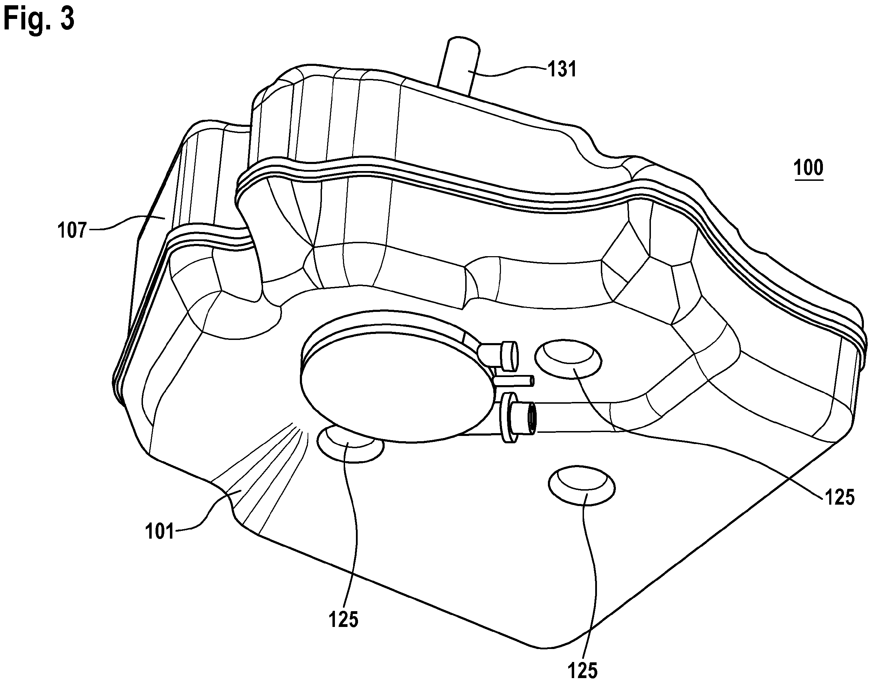

Fig. 3 zeigt eine weitere Ansicht des Flüssigkeitstanks 100 mit der oberen Flüssigkeitstankschale 107 und der unteren Flüssigkeitstankschale 101. In der Flüssigkeitstankschale 101 ist eine Pumpe eingesetzt, um die Flüssigkeit zu fördern.

Drei Verbindungselemente 103 sind ebenfalls einstückig in die untere Flüssigkeitstankschale 101 integriert und bilden einen Hohlraum 125, der von einer Außenwandung der Flüssigkeitstankschale 101 her zugänglich ist. Dadurch können die Kontaktflächen von außen her verbunden werden.

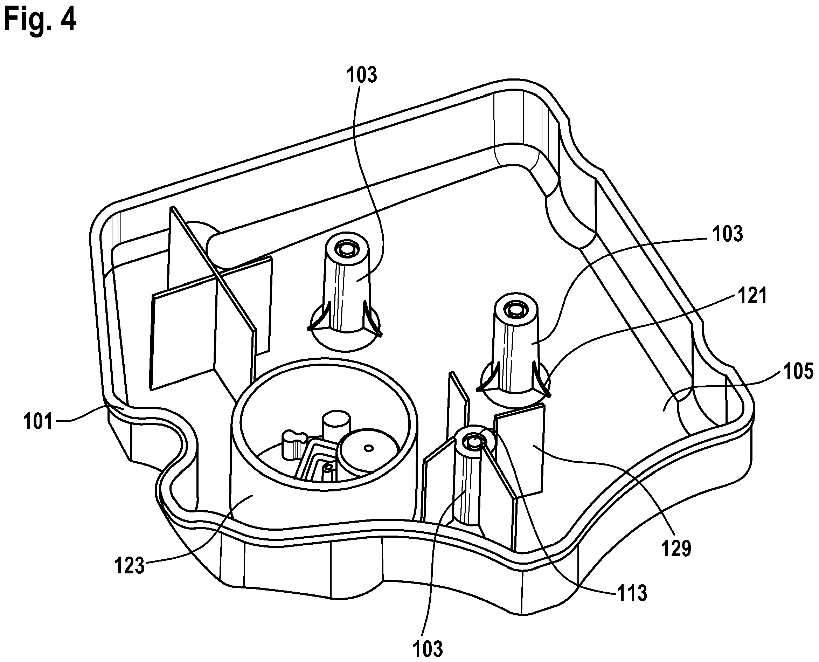

Fig. 4 zeigt eine Ansicht der Flüssigkeitstankschale 101, durch die die Unterseite des Flüssigkeitstanks 100 gebildet wird. Die Flüssigkeitstankschale 101 umfasst auf einer Innenseite 105 einen Schwalltopf 123 und drei Verbindungselemente 103, die sich von einer Innenwandung 105 der Flüssigkeitstankschale 101 senkrecht in das Innere des Flüssigkeitstanks 100 erstrecken. Die Verbindungselemente 103 werden durch säulenförmige Abschnitte der Flüssigkeitstankschale 101 gebildet, die in das Innere des Flüssigkeitstanks 100 hineinragen. Die gezeigten Verbindungselemente 103 sind zylinderförmig. Im Allgemeinen können die Verbindungselemente 103 jedoch auch andere Formen aufweisen, beispielsweise pyramidal, quaderförmig oder kreuzförmige schlanke Rippen.

Die Verbindungselemente 103 weisen die Kontaktfläche 113 zum Verbinden des Verbindungselementes 103 mit dem Verbindungselement 109 der Gegenschale auf. Die Kontaktfläche 113 setzt auf die gegenüberliegende Kontaktfläche 115 des Verbindungselementes 109 der entgegengesetzten Flüssigkeitstankschale 107 auf und wird mit dieser verschweißt. Dadurch erhöht sich die Gesamtstabilität des Flüssigkeitstanks 100. Die Verbindungselemente 103 und die Flüssigkeitstankschale 101 sind aus einem einstückigen Kunststoffteil gebildet, das beispielsweise ein Spritzgussformteil sein kann.

Daneben dienen die Verbindungselemente 103 zur Befestigung und Unterstützung einer oder mehrerer Schwallwände 129 im Inneren des Flüssigkeitstanks 100, so dass durch diese Schwallwandhalterungen gebildet werden. Die Schwallwände 129 sind seitlich an den Verbindungselementen 103 befestigt. Die Unterseite der Schwallwände 129 ist mit der Innenseite der Flüssigkeitstankschale 101 verbunden.

Die Schwallwände 129 dienen zum Vermindern der durch eine Flüssigkeit ausgeübten Kräfte, wenn sich der Flüssigkeitstank 100 beschleunigt. Daneben reduzieren die Schwallwände 129 Schwappgeräusche, indem diese als Elemente zur Beeinflussung der Flüssigkeitsbewegung im Flüssigkeitstank 100 dienen. Um die Festigkeit der Verbindungselemente 103 zu erhöhen, umfasst die Flüssigkeitstankschale 101 Stabilisierungsrippen 121 zum Stabilisieren des Verbindungselements 103 an der Innenwandung 105.

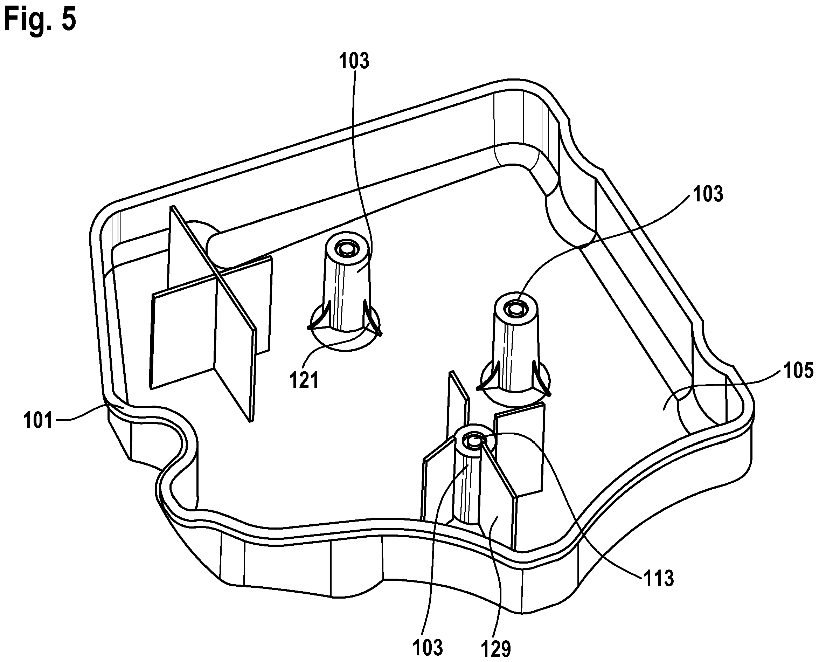

Fig. 5 zeigt eine weitere Ansicht einer Flüssigkeitstankschale 101 ohne Schwalltopf 121. An einem der Verbindungselemente 103 mit der Kontaktfläche 113 sind mehrere Schwallwände 129 befestigt. Die Schwallwände 129 ragen radial von dem Verbindungselement 103 in unterschiedlichen Richtungen in das Innere des Flüssigkeitstanks 100 hinein. Durch die Anordnung der Schwallwände 129 an der Innenwandung 105 und den Verbindungselementen 103 kann die Form des Flüssigkeitstanks 100 zusätzlich stabilisiert und gefestigt werden.

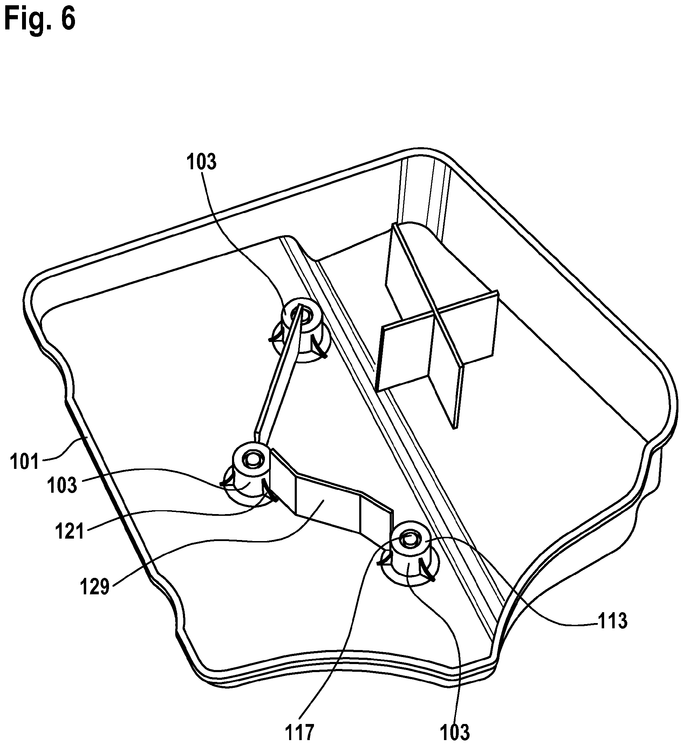

Fig. 6 zeigt eine weitere Ansicht einer Flüssigkeitstankschale 101. Die Verbindungselemente 103 umfassen in der Kontaktfläche 113 eine Vertiefung 117 zum Aufnehmen eines Schweißaustriebs. Die Vertiefungen 117 können in konzentrischen Kreisen auf der Kontaktfläche 113 angeordnet sein. In den Vertiefungen 117 wird bei einem Schmelz- und Anpressvorgang verdrängtes Material aufgenommen, so dass die Festigkeit der Verbindungsstelle verbessert wird.

Daneben sind die Verbindungselemente 103 durch Schwallwände 129 miteinander verbunden und mit Stabilisierungsrippen 121 stabilisiert. Dadurch erhöht sich die Stabilität des Flüssigkeitstanks 100 zusätzlich.

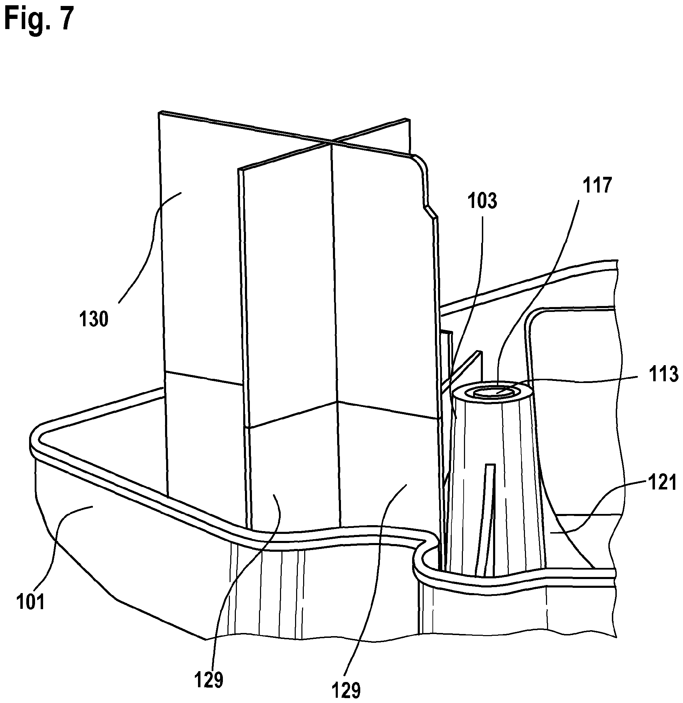

Fig. 7 zeigt eine Teilansicht einer Flüssigkeitstankschale 101. Das Verbindungselement 103 der Flüssigkeitstankschale 101 ragt in das Innere des Flüssigkeitstanks 100. Das Verbindungselement 103 ist seitlich durch die Stabilisierungsrippen 121 an der Flüssigkeitstankschale 101 stabilisiert. An der Oberseite des Verbindungselementes 103 ist die Kontaktfläche oder Verbindungsfläche 113 mit den Vertiefungen 117 angeordnet.

Als weiteres Verbindungselement dienen die Schwallwände 129 der unteren Flüssigkeitstankschale 101, die mit entsprechend angeordneten Schwallwänden 130 der oberen Flüssigkeitstankschale 107 verbunden sind. Eine kreuzförmige Anordnung der Schwallwände 129 ist besonders vorteilhaft, da Kräfte in zwei Richtungen effektiv aufgenommen werden können.

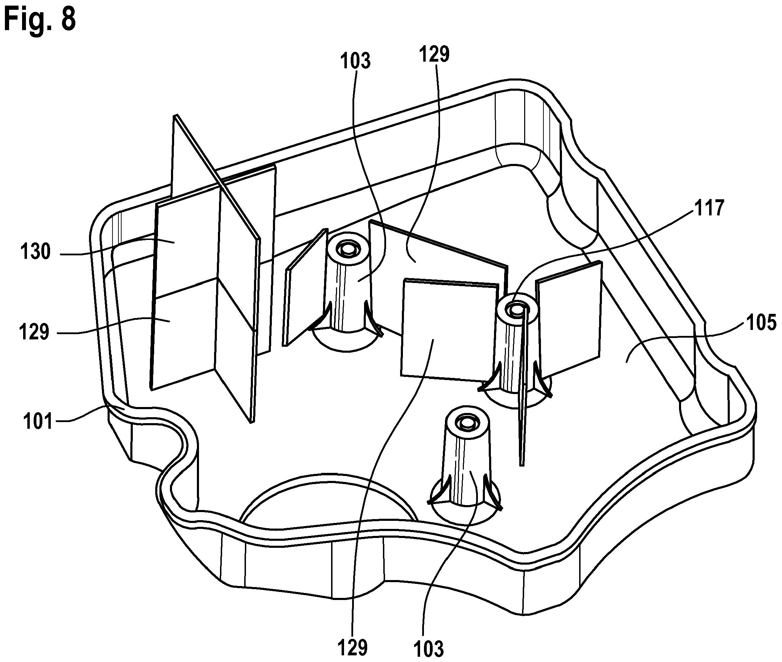

Fig. 8 zeigt eine weitere Ansicht einer Flüssigkeitstankschale 101. Die Verbindungselemente 103 können nicht gezeigte Führungselemente aufweisen, wie beispielsweise eine Nut oder eine Vertiefung, in die beim Zusammensetzen der oberen Flüssigkeitstankschale 107 und der unteren Flüssigkeitstankschale 101 die Schwallwand der Gegenseite einschiebbar ist. Die kreuzförmig angeordneten Schwallwände 129 der unteren Flüssigkeitstankschale 101 berühren die kreuzförmig angeordneten Schwallwände 130 der oberen Flüssigkeitstankschale 101 und sind mit diesen verbunden.

Die obere Flüssigkeitstankschale 107 kann im Allgemeinen die gleichen Merkmale wie die untere Flüssigkeitstankschale 101 aufweisen.

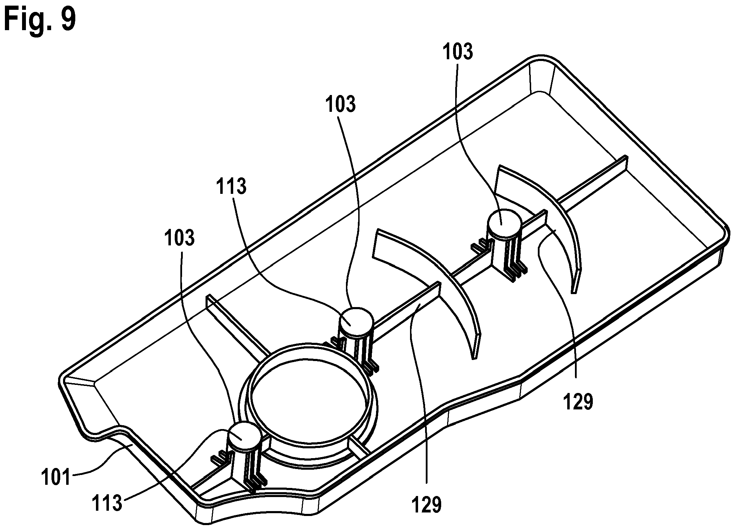

Fig. 9 zeigt eine weitere Ansicht einer Flüssigkeitstankschale 101. Die Verbindungselemente 103 sind zylinderförmig und ragen senkrecht in das Innere des Flüssigkeitstanks 100. Die Verbindungselemente 103 sind aus soliden Abschnitten gebildet. Ausgehend von den Verbindungselementen 103 verlaufen die Schwallwände 129 im Inneren des Flüssigkeitstanks 100. Die Verbindungselemente 103 weisen eine ebene und glatte Kontaktfläche 113 auf.

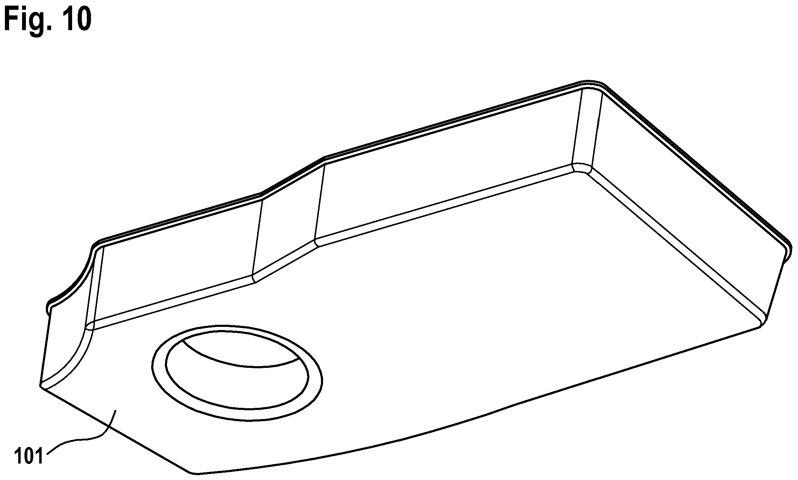

Fig. 10 zeigt eine Ansicht der Flüssigkeitstankschale 101 von unten. An der Außenseite der Flüssigkeitstankschale 101 kann ein Muster aus Verstärkungsrippen aufgebracht sein, um die Stabilität der Flüssigkeitstankschale 101 zu erhöhen. Die Außenwandung der Flüssigkeitstankschale 101 ist an der Stelle der Verbindungselemente 103 geschlossen.

Der Schutzbereich der vorliegenden Erfindung ist durch die Ansprüche gegeben und wird durch die in der Beschreibung erläuterten oder den Figuren gezeigten Merkmale nicht beschränkt.

### BEZUGSZEICHENLISTE

- 100: Flüssigkeitstank
- 101: Flüssigkeitstankschale
- 103: Verbindungselement
- 105: Innenwandung
- 107: Flüssigkeitstankschale
- 109: Verbindungselement
- 111: Innenwandung
- 113: Kontaktfläche
- 115: Kontaktfläche
- 117: Vertiefung
- 121: Stabilisierungsrippen
- 123: Schwalltopf
- 125: Hohlraum
- 129: Schwallwand
- 130: Schwallwand
- 131: Einfüllstutzen

## Patentansprüche

1. Flüssigkeitstank (100), mit:
einer ersten Flüssigkeitstankschale (101) mit einem ersten Verbindungselement (103), das sich von einer Innenwandung (105) der ersten Flüssigkeitstankschale (101) in das Innere des Flüssigkeitstanks (100) erstreckt; und
einer zweiten Flüssigkeitstankschale (107) mit einem zweiten Verbindungselement (109), das sich von einer Innenwandung (111) der zweiten Flüssigkeitstankschale (107) in das Innere des Flüssigkeitstanks (100) erstreckt;
wobei das erste Verbindungselement (109) und das zweite Verbindungselement (111) im Inneren des Flüssigkeitstanks miteinander durch Schweißen verbindbar sind,
wobei das erste Verbindungselement (103) und/oder das zweite Verbindungselement (109) eine Kontaktfläche (113, 115) zum Befestigen des Verbindungselementes (103, 109) mit dem Verbindungselement (103, 109) der Gegentankschale (101, 107) umfasst, und
wobei die Kontaktfläche (113, 115) eine Vertiefung (117) zum Aufnehmen eines Schweißaustriebs von bei einem Schmelz- oder Anpressvorgang verdrängtem Material umfasst.

2. Flüssigkeitstank (100) nach einem der vorangehenden Ansprüche, wobei die erste Flüssigkeitstankschale (101) und/oder die zweite Flüssigkeitstankschale (101) ein Kunststoffformteil ist.

3. Flüssigkeitstank (100) nach einem der vorangehenden Ansprüche, wobei die erste Flüssigkeitstankschale (101) und das erste Verbindungselement (103) einstückig durch ein Spritzgussteil gebildet sind und/oder die zweite Flüssigkeitstankschale (107) und das zweite Verbindungselement (109) einstückig durch ein Spritzgussteil gebildet sind.

4. Flüssigkeitstank (100) nach einem der vorangehenden Ansprüche, wobei das erste Verbindungselement (103) der ersten Flüssigkeitstankschale (101) ein säulenförmiger Abschnitt der ersten Flüssigkeitstankschale (101) und/oder das zweite Verbindungselement (109) der zweiten Flüssigkeitstankschale (107) ein säulenförmiger Abschnitt der zweiten Flüssigkeitstankschale (107) ist.

5. Flüssigkeitstank (100) nach einem der vorangehenden Ansprüche, wobei die Vertiefung (117) kreisförmig und/oder kreuzförmig auf der Kontaktfläche (113, 115) gebildet ist.

6. Flüssigkeitstank (100) nach Anspruch 5, wobei die Kontaktfläche (113, 115) mehrere konzentrische kreisförmige Vertiefungen umfasst.

7. Flüssigkeitstank (100) nach einem der vorangehenden Ansprüche, wobei das erste Verbindungselement (103) und/oder das zweite Verbindungselement (109) eine zylindrische Form aufweisen oder einen kreuzförmig prismatischen Querschnitt aufweisen.

8. Flüssigkeitstank (100) nach einem der vorangehenden Ansprüche, wobei die erste Flüssigkeitstankschale (101) Stabilisierungsrippen (121) zum Stabilisieren des ersten Verbindungselements (103) an der Innenwandung (105) und/oder die zweite Flüssigkeitstankschale (107) Stabilisierungsrippen (121) zum Stabilisieren des zweiten Verbindungselements (109) an der Innenwandung (111) umfasst.

9. Flüssigkeitstank (100) nach einem der vorangehenden Ansprüche, wobei das erste Verbindungelement (103) oder das zweite Verbindungselement (109) durch einen Hohlkörper mit einem Hohlraum (125) gebildet sind.

10. Flüssigkeitstank (100) nach Anspruch 9, wobei der Hohlraum (125) von einer Außenwandung her zugänglich ist, um das erste Verbindungselement (103) und das zweite Verbindungselement (109) zu verbinden.

11. Flüssigkeitstank (100) nach einem der vorangehenden Ansprüche, wobei das erste Verbindungselement (103) im Zentrum der ersten Flüssigkeitstankschale (101) und/oder das zweite Verbindungselement (109) im Zentrum der zweiten Flüssigkeitstankschale (107) angeordnet ist.

12. Flüssigkeitstank (100) nach einem der vorangehenden Ansprüche, wobei die erste Flüssigkeitstankschale (101) eine Schwallwand (129) umfasst, die an dem ersten Verbindungselement (103) befestigt ist oder die zweite Flüssigkeitstankschale (107) eine Schwallwand (129) umfasst, die an dem zweiten Verbindungselement (109) befestigt ist.

## Claims

1. A liquid tank (100), having:
a first liquid tank shell (101) with a first connecting element (103) that extends from an inner wall (105) of the first liquid tank shell (101) into the interior of the liquid tank (100); and
a second liquid tank shell (107) with a second connecting element (109) that extends from an inner wall (111) of the second liquid tank shell (107) into the interior of the liquid tank (100);
wherein the first connecting element (109) and the second connecting element (111) are connectable to one another in the interior of the liquid tank by welding,
wherein the first connecting element (103) and/or the second connecting element (109) include a contact surface (113, 115) for fastening the connecting element (103, 109) to the connecting element (103, 109) of the mating tank shell (101, 107), and
wherein the contact surface (113, 115) includes a depression (117) for accommodating a weld expulsion of material that is displaced during a melting or pressing operation.

2. The liquid tank (100) according to one of the preceding claims, wherein the first liquid tank shell (101) and/or the second liquid tank shell (101) are a plastic molded part.

3. The liquid tank (100) according to one of the preceding claims, wherein the first liquid tank shell (101) and the first connecting element (103) are formed in one piece as an injection-molded part, and/or the second liquid tank shell (107) and the second connecting element (109) are formed in one piece as an injection-molded part.

4. The liquid tank (100) according to one of the preceding claims, wherein the first connecting element (103) of the first liquid tank shell (101) is a pillar-shaped section of the first liquid tank shell (101), and/or the second connecting element (109) of the second liquid tank shell (107) is a pillar-shaped section of the second liquid tank shell (107).

5. The liquid tank (100) according to one of the preceding claims, wherein the depression (117) is formed on the contact surface (113, 115) in the shape of a circle or in the shape of a cross.

6. The liquid tank (100) according to Claim 5, wherein the contact surface (113, 115) includes multiple concentric circular depressions.

7. The liquid tank (100) according to one of the preceding claims, wherein the first connecting element (103) and/or the second connecting element (109) have a cylindrical shape or a cross-shaped prismatic cross section.

8. The liquid tank (100) according to one of the preceding claims, wherein the first liquid tank shell (101) comprises stabilizing ribs (121) for stabilizing the first connecting element (103) on the inner wall (105), and/or the second liquid tank shell (107) comprises stabilizing ribs (121) for stabilizing the second connecting element (109) on the inner wall (111).

9. The liquid tank (100) according to one of the preceding claims, wherein the first connecting element (103) or the second connecting element (109) is formed by a hollow body having a cavity (125) .

10. The liquid tank (100) according to Claim 9, wherein the cavity (125) is accessible from an outer wall in order to connect the first connecting element (103) and the second connecting element (109) .

11. The liquid tank (100) according to one of the preceding claims, wherein the first connecting element (103) is positioned in the center of the first liquid tank shell (101), and/or the second connecting element (109) is situated in the center of the second liquid tank shell (107).

12. The liquid tank (100) according to one of the preceding claims, wherein the first liquid tank shell (101) includes a baffle wall (129) that is fastened to the first connecting element (103), or the second liquid tank shell (107) includes a baffle wall (129) that is fastened to the second connecting element (109).

## Revendications

1. Réservoir de liquide (100), comprenant :
une première coque de réservoir de liquide (101) avec un premier raccord (103) s'étendant depuis une paroi intérieure (105) de la première demi-coque de réservoir de liquide (101) jusqu'à l'intérieur du réservoir de liquide (100) ; et
une deuxième coque de réservoir de liquide (107) avec un deuxième raccord (109) s'étendant depuis une paroi intérieure (111) de la deuxième demi-coque de réservoir de liquide (107) jusqu'à l'intérieur du réservoir de liquide (100) ;
dans lequel le premier raccord (109) et le deuxième raccord (111) peuvent être reliés l'un à l'autre par soudage à l'intérieur du réservoir de liquide,
dans lequel le premier raccord (103) et/ou le deuxième raccord (109) comprennent une surface de contact (113, 115) pour fixer le raccord (103, 109) au raccord (103, 109) de la coque de réservoir complémentaire (101, 107), et
dans lequel la surface de contact (113, 155) comprend un creux (117) pour recevoir une bavure de soudure provenant d'un matériau déplacé lors d'une opération de fusion ou de pression.

2. Réservoir de liquide (100) selon la revendication 1, dans lequel la première coque de réservoir de liquide (101) et/ou la deuxième coque de réservoir de liquide (101) sont des pièces moulées en matière plastique.

3. Réservoir de liquide (100) selon l'une quelconque des revendications précédentes, dans lequel la première coque de réservoir de liquide (101) et le premier raccord (103) sont formés intégralement par une pièce moulée par injection et/ou la deuxième coque de réservoir de liquide (107) et le deuxième raccord (109) sont formés intégralement par une pièce moulée par injection.

4. Réservoir de liquide (100) selon l'une quelconque des revendications précédentes, dans lequel le premier raccord (103) de la première coque de réservoir de liquide (101) est une partie en forme de colonne de la première coque de réservoir de liquide (101) et/ou le deuxième raccord (109) de la deuxième coque de réservoir de liquide (107) est une partie en forme de colonne de la deuxième coque de réservoir de liquide (107).

5. Réservoir de liquide (100) selon l'une quelconque des revendications précédentes, dans lequel le creux (117) est formé en forme de cercle et/ou de croix sur la surface de contact (113, 115).

6. Réservoir de liquide (100) selon la revendication 5, dans lequel la surface de contact (113, 115) comprend plusieurs creux circulaires concentriques.

7. Réservoir de liquide (100) selon l'une quelconque des revendications précédentes, dans lequel le premier raccord (103) et/ou le deuxième raccord (109) présentent une forme cylindrique ou une section transversale prismatique en croix.

8. Réservoir de liquide (100) selon l'une quelconque des revendications précédentes, dans lequel la première coque de réservoir de liquide (101) comprend des nervures de stabilisation (121) pour stabiliser le premier raccord (103) sur la paroi intérieure (105) et/ou la deuxième coque de réservoir de liquide (107) comprend des nervures de stabilisation (121) pour stabiliser le deuxième raccord (109) sur la paroi intérieure (111).

9. Réservoir de liquide (100) selon l'une quelconque des revendications précédentes, dans lequel le premier raccord (103) ou le deuxième raccord (109) est formé par un corps creux avec une cavité (125).

10. Réservoir de liquide (100) selon la revendication 9, dans lequel la cavité (125) est accessible depuis une paroi extérieure pour relier le premier raccord (103) et le deuxième raccord (109).

11. Réservoir de liquide (100) selon l'une quelconque des revendications précédentes, dans lequel le premier raccord (103) est disposé au centre de la première coque de réservoir de liquide (101) et/ou le deuxième raccord (109) est disposé au centre de la deuxième coque de réservoir de liquide (107).

12. Réservoir de liquide (100) selon l'une quelconque des revendications précédentes, dans lequel la première coque de réservoir de liquide (101) comprend un brise-flot (129) fixé au premier raccord (103) ou la deuxième coque de réservoir de liquide (107) comprend un brise-flot (129) fixé au deuxième raccord.
